# EUROPEAN PATENT APPLICATION

(11) **EP 3 783 844 A1**
(43) Date of publication of application: **24.02.2021**
(21) Application number: 20164658.5
(22) Date of filing: 20.03.2020
(51) Int. Cl.: H04L 12/58, H04L 12/18, H04W 84/12, H04W 84/18, H04W 84/22

(54) **GROUP INSTANT MESSAGING DEVICE, SYSTEM AND INSTANT MESSAGING METHOD**

(30) Priority: 23.08.2019 CN 201910784980
(71) Applicant: Sysmax Communication Technology Co., Ltd., Guangzhou, Guangdong 510623 (CN)
(72) Inventor: LI, Wenjie, Guangzhou, Guangdong 510623 (CN)
(74) Representative: Boult Wade Tennant LLP

(57) **Abstract**

The present disclosure provides group instant messaging device including: a first wireless communication unit configured to perform short-range wireless communication with an associated user terminal, such that the group instant messaging device forms a group instant messaging network with a user terminal within a predetermined instant messaging group via the associated user terminal; an audio recording unit configured to record user voices, generate audio data, and send the audio data to other user terminals in the instant messaging group by the associated user terminal via the group instant messaging network; an audio playing unit configured to receive audio data from other user terminals in the instant messaging group by the associated user terminal via the group instant messaging network, and perform an instant playout; and an input control unit configured to control the ON and OFF of the audio recording unit.

## Description

### TECHNICAL FILED

The present disclosure relates to the field of wireless transmission technologies, and in particular, to group instant messaging device and system, and an instant messaging method.

### BACKGROUND

In the era of mobile Internet when an instant messaging (IM) social software, such as WeChat, Facebook, or the like, is popular, group chats have become essential for work and life.

### SUMMARY

The present disclosure provides group instant messaging device and system and an instant messaging method, so as to eliminate or improve at least one defect in related art.

The technical solutions of the present disclosure are as follows.

According to a first aspect of the present disclosure, there is provided a group instant messaging device, including a first wireless communication unit, an audio recording unit, an audio playing unit and an input control unit.

The first wireless communication unit is configured to perform short-range wireless communication with an associated user terminal, such that the group instant messaging device forms a group instant messaging network with a user terminal within a predetermined instant messaging group via the associated user terminal; the instant messaging group includes: the associated user terminal and one or more additional user terminals wirelessly connected to the associated user terminal;
the audio recording unit is configured to record user voices, generate audio data, and send the audio data to other user terminals in the instant messaging group by the associated user terminal via the group instant messaging network;
the audio playing unit is configured to receive audio data from other user terminals in the instant messaging group by the associated user terminal via the group instant messaging network, and perform an instant playout; and
the input control unit is configured to control the ON and OFF of the audio recording unit.

Optionally, the group instant messaging device further includes an information indicating circuit indicating a state of the group instant messaging device.

Optionally, the group instant messaging device is provided in its body with a radio frequency module connected to the audio recording unit, the audio playing unit, and the input control unit to send and receive the audio data in the mode of radio frequency communication.

Optionally, the radio frequency module is disposed in the body of the group instant messaging device; or, the radio frequency module is connected to the body of the device via a connection interface.

Optionally, the first wireless communication unit is a short-range wireless communication unit, and the short-range wireless communication unit is a low-power Bluetooth module or a Wi-Fi communication module; the input control unit is a control key, a touch screen, a gyroscope or an acceleration sensor located on a front or side surface of the body of the group instant messaging device; the audio recording unit is a microphone; the audio playing unit is a speaker; and the information indicating circuit is an LCD display unit and/or an indicator circuit.

Optionally, the group instant messaging device is a wearable device.

Optionally, the body of the group instant messaging device further includes a GPS positioning module configured to generate positioning data.

Optionally, the body of the group instant messaging device further includes a voice conversion module configured to convert the positioning data into audio data; and an output control key configured to output the audio data converted by the voice conversion module to the audio playing unit.

Optionally, the body of the device further has thereon a data transmission interface; and the group instant messaging network further includes an additional instant messaging device associated with the additional terminal in the instant messaging group.

According to a second aspect of the present disclosure, there is provided a group instant messaging system including the group instant messaging device as mentioned above and the associated user terminal.

The associated user terminal includes a remote wireless communication unit and a short-range wireless communication unit.

According to a third aspect of the present disclosure, there is provided a group instant messaging method, including:
establishing a short-range wireless communication connection between a first portable terminal and an associated user terminal, such that the first portable terminal forms a group instant messaging network with a user terminal within a predetermined instant messaging group via the associated user terminal, wherein the instant messaging group includes: the associated user terminal and one or more additional user terminals wirelessly connected to the associated user terminal;
recording user voice by the first portable terminal, generating audio data, and sending the audio data to the associated user terminal to be sent by the associated user terminal to other user terminals in the instant messaging group;
receiving audio data from other user terminals in the instant messaging group by the first portable terminal via the associated user terminal, and performing an instant playout using an audio playing unit.

Optionally, the short-range wireless communication connection includes low-power Bluetooth communication connection and/or Wi-Fi communication connection; and the method further includes indicating a state of the group instant messaging device using an information indicating circuit; and/or when the wireless connection between the at least one user terminal and other user terminals in the instant messaging group is disconnected, sending the audio data generated by the first portable terminal using an radio frequency module connected with the first portable terminal, and receiving audio data sent by a corresponding radio frequency module associated with other user terminals in the instant messaging group and playing the audio data by the audio playing unit.

Optionally, the method further includes receiving, by the first portable terminal, position information using a GPS module, generating positioning data, converting the generated positioning data into audio data based on an output instruction, and outputting the audio data converted from the positioning data by the audio playing unit.

According to a fourth aspect of the present disclosure, there is provided a group instant messaging method, including:
establishing a short-range wireless communication connection between a first portable terminal and an associated user terminal, such that the first portable terminal forms a group instant messaging network with a user terminal within a predetermined instant messaging group via the associated user terminal, wherein the instant messaging group includes: the associated user terminal and one or more additional user terminals wirelessly connected to the associated user terminal;
receiving, by the associated user terminal, audio data generated by the first portable terminal based on a voice recorded by the user, and sending the received audio data to other user terminals in the instant messaging group;
receiving, by the associated user terminal, audio data sent from other user terminals in the predetermined instant messaging group, and sending the received audio data to the first portable terminal, so as to perform an instant playout by the audio playing unit of the first portable terminal.

Optionally, the short-range wireless communication connection includes low-power Bluetooth communication connection and/or Wi-Fi communication connection; the method further includes when the associated user terminal fails to send the audio data to at least one of other user terminals in the instant messaging group, sending indication information to the first portable terminal to instruct a radio frequency module connected to the first portable terminal to send the audio data; receiving audio data sent by other radio frequency modules with the same frequency, and playing the audio data by the audio playing unit.

Optionally, the method further includes setting one of a plurality of groups as the predetermined instant messaging group.

In the embodiment of the present disclosure, the instant messaging device may simplify the group chat function, without the complicated operations of the group chat app.

Further, when the quality of communication network of the user terminal is very poor or no communication network is provided, the radio frequency module is used for transceiving and automatically playing the audio data for group chat, thereby further improving the user experience.

Persons skilled in the art shall understand that the objects and advantages implemented by the present disclosure are not limited to the foregoing, and may clearly understand that the present disclosure may realize the above-mentioned and other objects according to the following detailed description.

### BRIEF DESCRIPTION OF THE DRAWINGS

The drawings described herein are provided to provide a further understanding of the present disclosure, constituting a part of the present application, but are not intended to limit the present disclosure. In the drawings:
FIG. 1 is schematic diagram of an instant messaging system according to an embodiment of the present disclosure;
FIG. 2 is a schematic diagram of an instant messaging system according to another embodiment of the present disclosure;
FIG. 3 is a schematic block diagram of an instant messaging device according to an embodiment of the present disclosure;
FIG. 4 is a schematic diagram of an implementation principle according to an embodiment of the present disclosure;
FIG. 5 is a schematic diagram of an implementation principle according to another embodiment of the present disclosure;
FIG. 6 is a schematic flowchart of an instant messaging method according to an embodiment of the present disclosure; and
FIG. 7 is a schematic flowchart of an instant messaging method according to another embodiment of the present disclosure.

### DETAILED DESCRIPTION

In order to make the objects, technical solutions and advantages of present disclosure more comprehensible, the present disclosure will be further described in detail with reference to the embodiments and drawings. Herein, the exemplary embodiments of the present disclosure and the description thereof are intended to explain the present disclosure, not to limit the present disclosure.

Herein, it should also be noted that in order to avoid obscuring the present disclosure by unnecessary details, only the structures and/or processing steps closely related to the solution according to the present disclosure are shown in the drawings, and the other details that are not relevant to the present disclosure are omitted.

It should be emphasized that the term "includes/including/comprises/comprising" when used in this specification is taken to specify the presence of stated features, integers, steps or components but does not preclude the presence or addition of one or more other features, integers, steps, components or combination thereof.

Herein, it should also be noted that the embodiments in the present disclosure and the features in the embodiments may be combined with each other without conflicts.

The current group chat mode that relies merely on the mobile Internet APP has the following drawbacks: the operations are complicated. Based on the current design of a mobile phone, in order to realize one communication within a group, it is usually necessary to unlock the mobile phone, start a group chat app (such as WeChat, or the like) in the mobile phone, look for and open a group, which are very inconvenient to operate.

In addition, these group chat modes are highly dependent on the quality of network communication and cannot be used when the network signal is poor or no network signal is provided.

Therefore, how to improve a user's instant messaging tool, so as to improve user experiences, is a problem to be solved.

In view of this, the present disclosure provides a hardware product based on an instant messaging group. The product may send voices by one key (or one touch or one action), and may automatically and instantly play the voices of group members even when the screen of a mobile phone is locked, thereby simplifying the group chat function, without the complicated operations of the computer APP for group chat (such as unlocking, starting an APP, looking for and opening groups, or the like). The computer APP for group chat in the embodiment of the present disclosure may be a self-designed group chat program or may be an existing group chat program, which mainly includes functions such as account management, group management, and device management, or the like. The account management includes functions such as registration of personal accounts and modification of personal information, or the like. The group management may include functions such as creating, deleting, sharing, joining, and exiting a group, or the like. The device management is mainly directed to the management of hardware products of user terminals, for example, the displaying and setting of related hardware parameters, such as battery level, volume, or the like.

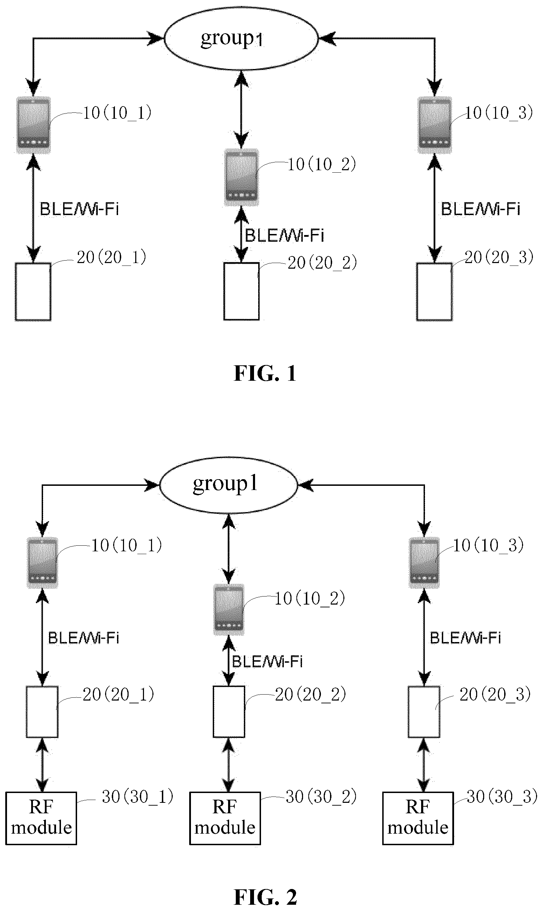

FIG. 1 is a schematic diagram of a group instant messaging system according to an embodiment of the present disclosure. As shown in FIG. 1, the system includes: a plurality of (i.e., two or more) user terminals 10, which may create a group by using a computer group chat software (APP). The information for the group may be stored in a cloud server, and user terminals in the group may establish wireless connection and communication in the group through, for example, a mobile communication network (such as 2G/3G/4G/5G, or the like) or wireless communication, such as Wi-Fi. The instant messaging group shown in FIG. 1 includes three user terminals 10_1-10_3, but the present disclosure is not limited thereto, and may also include two user terminals, or four or more user terminals. In the embodiment of the present disclosure, the user terminal 10 may be an electronic device capable of performing wireless communication and information interaction through the group chat software, such as a mobile phone, a PAD, a tablet computer, a PC, or the like, but is not limited to these electronic devices.

As shown in FIG. 1, the group instant messaging system further includes one or more group instant messaging devices (simply referred to as "instant messaging devices" or "first portable terminals") 20, wirelessly connected to one or more of the plurality of user terminals 10.For example, the group instant messaging device 20 of a user may wirelessly communicate with the user terminal 10 through low-power Bluetooth (BLE) communication or Wi-Fi communication. In the present embodiment, the user terminal connected wirelessly to and associated with the group instant messaging device 20 may be referred to as an "associated user terminal" or "interconnected user terminal". Herein, "associated" refers to the connection relation which is established by pairing or searching and in which two parties are bound with each other. As shown in FIG. 1, the associated user terminal of the instant messaging device 20_1 is a user terminal 10_1, the associated user terminal of the instant messaging device 20_2 is a user terminal 10_2, and the associated user terminal of the instant messaging device 20_3 is a user terminal 10_3. In the embodiment of the present disclosure, only one user terminal 10 in the instant messaging group may be interconnected with the instant messaging device 20, and the user of the user terminal uses the instant messaging device 20 to implement instant messaging with other user terminals in the group; alternatively, several user terminals 10 are interconnected with the corresponding group instant messaging device 20, and the user of each user terminal uses the corresponding instant messaging device 20 to implement the instant messaging with other user terminals in the group. In FIG. 1, it is shown that there are three user terminals (10_1, 10 2, 10_3) in the group 1, each of which is interconnected with a group instant messaging device 20. FIG. 1 is merely shown for the exemplary purpose, and there may also be four or more user terminals and four or more group instant messaging devices 20 or one or two group instant messaging devices 20.That is, some users in the group are allowed to carry the group instant messaging device, or it is possible that all users carry the group instant messaging device, so as to conveniently implement the instant messaging.

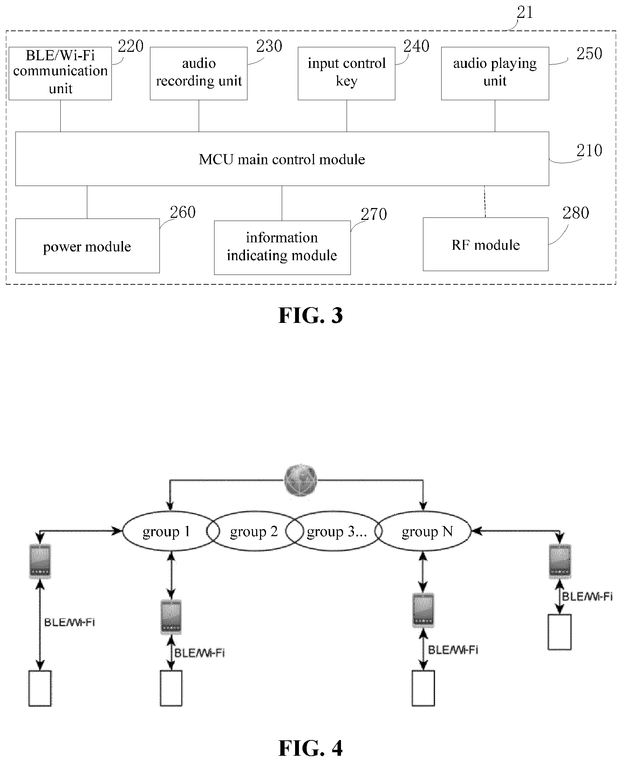

The structure of a group instant messaging device (e.g., 20_1) in the system shown in Fig. 1 will be described in more detail below. Other instant messaging devices may have the same or similar structures and will not be described again. The instant messaging device 20_1 may include a host body. As shown in FIG. 3, the host body 21 may include: a wireless communication unit 220, an audio recording and playing circuit (which may include an audio recording unit 230 and an audio playing unit 250), an input control unit (such as, an input control key) 240, a power module 260 and a main controller 210.

The wireless communication unit 220 is configured to perform wireless communication with the associated user terminal 10_1 (hereinafter, taking a mobile phone as an example), such that the group instant messaging device 20_1 forms a group instant messaging network with all user terminals in the predetermined instant messaging group via the associated user terminal 10_1.

In an embodiment of the present disclosure, the user may carry the instant messaging device and the mobile phone at the same time, which are very close to each other. Therefore, in some embodiment, the wireless communication unit 220 is a short-range wireless communication unit configured to perform the short-range wireless communication with the associated user terminal 10_1. As an example, the wireless communication unit 220, which is the short-range wireless communication unit, includes a low-power Bluetooth (BLE) module and/or a Wi-Fi communication module, but the present disclosure is not limited thereto, and may be a hardware module adopting other short-range wireless communication modes. Herein, the short-range wireless communication unit is taken as an example, which, however, does not exclude that the wireless communication unit 220 may implement a remote wireless communication function.

The audio recording unit 230 of the audio recording and playing circuit is configured to record user voices, generate audio data, and send the audio data from the associated user terminal 10_1 to other user terminals 20 2 and 20 3 in the instant messaging group via the group instant messaging network. In an embodiment of the present disclosure, the audio recording unit 230 may be, for example, a microphone.

In order to implement one-touch voice messaging, the input control unit 240 is employed to control the audio recording unit 230. The input control unit 240 may be in the form of a physical key (input control key) located on the front or side surface of the body of the device, for controlling the ON and OFF of the audio recording unit 230. For example, the audio recording unit 230 may be turned on to record voices by pressing the input control key 240, and may be turned off to end the voice recording by releasing the input control key 240.The recorded voice is converted by the audio recording unit 230 into audio data to be sent to the associated user terminal 10-1. The audio recording unit 230 is controlled by one touch of the input control key 240 to record voices, thereby avoiding complicated operations, such as unlocking the screen of the mobile phone of the user, starting the group chat APP, entering the group, recording by pressing a recording area, or the like, and greatly improving the user experience.

The input control key 240 may be not only a physical key located on the front or side surface of the body of the device, but also may be implemented by using a touch screen, i.e., triggering the ON and OFF of the audio recording unit 230 by touch. In another embodiment of the present disclosure, the input control key 240 may also be substituted with a gesture recognition circuit (for example, a gyroscope, an acceleration sensor, or the like) to trigger the ON and OFF of the audio recording unit 230 based on a specific user action. For example, the instant messaging device may be designed into a wearable device (e.g., a watch, a wristband, a headset, an accessory, etc.).When the user does a first specific action (such as drawing a circle or swinging arms), the gyroscope or the acceleration sensor may detect the actions, thereby triggering the audio recording unit 230 to start the recording of the voice. When the user does a second specific action (such as vibrating the arm or the like), the audio recording unit 230 is triggered to end the recording and send the audio data generated based on the recording to the associated user terminal 10-1. The above-mentioned manner in which the audio recording unit is controlled to trigger the audio recording unit 230 is merely an example, and the present disclosure is not limited thereto, but other forms may be used.

The audio playing unit 250 of the audio recording and playing circuit is configured to receive, from the associated user terminal 10-1, audio data which is sent from other user terminals in the instant messaging group via the group instant messaging network, and to perform instant playout. In an embodiment of the present disclosure, the audio playing unit 250 may be a speaker. After receiving the audio data from other user terminals in the predetermined instant messaging group, the associated user terminal 10-1 transmits the audio data directly to the audio playing unit 250 of the instant messaging device via the BLE or Wi-Fi module for instant output, without complicated operations, such as unlocking the screen of the mobile phone of the user, starting the group chat APP, entering the group, listening to the audio, or the like, which greatly improves the user experience.

In addition to the audio recording unit 230 and the audio playing unit 250, the audio recording and playing circuit may further include a headphone jack externally connected with wired headphones, for recording and playing audio.

The power module 260 is configured to supply power to various electrical components of the instant messaging device. In the embodiment of the present disclosure, the mobile phone body of the instant messaging device has a USB interface thereon, for charging the power module 260 using a charging device. The USB interface may also be configured to transmit other data.

In the embodiment of the present disclosure, an MCU main control module, as a main controller 210, is connected with the wireless communication unit 220, the audio recording unit 230, the input control unit 240, the audio playing unit 250, and the power module 260, or the like, for performing overall logic control. The MCU main control module may be implemented by an application-specific processing chip, a processing circuit or a general purpose chip.

Additionally, in an optional embodiment of the present disclosure, the group instant messaging device may further include an information indicating circuit 270 configured to indicate the state of the instant messaging device. As an example, the information indicating circuit may include an LCD display screen, an indicator circuit, and/or an audible indicating circuit. For example, the LCD display screen may be used as a part of the housing of the host body, on which information such as battery level, volume, recording status, and other information of the instant messaging device may be displayed, and the above-mentioned information may also be indicated by the indicator color or voice prompt. In another embodiment of the present disclosure, the group instant messaging device may not only receive voices sent by other user terminals in the instant messaging group via the mobile phone 10_1, but also receive information such as text or pictures, which may be preferably instantly displayed on the LCD display screen.

The group chat function may be simplified by the above-mentioned group instant messaging device associated with the user terminal for group chat, such as a mobile phone, without the complicated APP operations.

In addition, in order to further overcome the problem that the group instant messaging cannot be performed in a region where the signal of the wireless communication network is poor or the network is not available, in another embodiment of the present disclosure, the host body of the group instant messaging device is further equipped with a radio frequency (RF) module 280 as a part of the group instant messaging device. The RF module 280 may be connected with the audio recording unit 230, the audio playing unit 250, the input control unit 240, or the like through the MCU main control module, so as to send and receive the audio data in the mode of radio frequency communication. In the region where the signal of the wireless communication network is poor or no signal is provided, after the input control unit 240 activates the audio recording unit 230 in the manner of pushing a key, touching the screen or making the control action, the audio recording unit 230 records the user voice, generates the audio data, and sends the generated audio data through the RF module 280. At this point, other users in the instant messaging group need to have an instant messaging device capable of receiving audio data through the RF module, and may chat in a group conveniently through the instant messaging device, without performing complicated operations through the APP interface of the mobile phone, for example.

In another embodiment of the present disclosure, the RF module may not be installed inside the instant messaging device, but may be disposed outside the instant messaging device, as a separate hardware. The RF module 30 (including 30_1, 30 2, 30_3)shown in FIG. 2 is configured to be connected with the instant messaging device through a connection interface or wirelessly, thereby being used as an accessory of the instant messaging device. In the case of the wireless connection, the RF module has a built-in wireless transmission module, such as Bluetooth, which may perform short-range Bluetooth communication with the host body of the instant messaging device.

In another embodiment of the present disclosure, the instant messaging device may also be provided therein with a GPS positioning module (not shown) configured to generate positioning data that may be displayed on the LED display screen, thereby providing location positioning for the user. Further, the host body of the instant messaging device may further include: a voice conversion module and an output control key. The voice conversion module is configured to convert positioning data into audio data. The output control key is configured to control the ON of the voice conversion module to output the audio data converted from the positioning data by the voice conversion module to the audio playing unit for instant playout. For example, when the user desires to know the position of his address, the output control key may be used to trigger the activation of the voice conversion module, the address data is converted into audio data, and the audio data converted from the address data is output to the audio playing unit for real-time play, thereby obtaining the current position information, without the complicated APP interface operations.

In an embodiment of the present disclosure, the group instant messaging implemented by the instant messaging device each time is suitable for one group created in the group chat software of the user terminal. In the case where one group is created in the group chat software of the user terminal, each instant messaging device and the user terminal in the group constitute the group instant messaging network. Based on the instant messaging network, the group chat voice data is played automatically in the instant messaging device, and the audio data is sent quickly in the instant messaging device, such as by one touch, which greatly improves the user experience. In the case where a plurality of groups are created in the group chat software of the user terminal, only one group may be allowed for each of the user terminals to be assisted the instant messaging through the group instant messaging device in the same period. As an example, the user terminal may set only one group as the group for being assisted instant messaging through the instant messaging device, and may set an auxiliary instant messaging identifier for the group, such that the user terminal with the identifier may determine whether the interactive message from other user terminals in the group should be played by the instant messaging device by judging whether the current group in chatting belongs to a group that should be assisted by the instant messaging device. Moreover, in the case where one of the groups is provided with the auxiliary instant messaging identifier, the data from the instant messaging device is automatically sent by the associated user terminal to the group corresponding to the instant messaging identifier.

Based on the instant messaging device as described above, the automatic play of messages in group chat and the one-touch group chat may be realized conveniently and quickly in combination with the user terminal (such as a mobile phone) installed with the group chat software, and a series of complicated operations for a certain important group in the traditional group chat software is omitted, such as unlocking, entering the APP, entering the group, or the like.

FIG 4 shows a schematic flow chart of an instant messaging method according to an embodiment of the present disclosure. As shown in FIG. 4, for all user terminals nationwide, many different groups are created among different user terminals, and the information of these groups may be stored on a remote server of the instant messaging software. There may be the same user terminal among different groups. That is, the same user terminal may belong to only one group or may belong to different groups at the same time. As long as one user terminal has selected only one group as the group requiring the assistant instant messaging by the group instant messaging device in a certain period of time, the user terminal may assist this group messaging by using the instant messaging device, and perform communication traditionally for other groups.

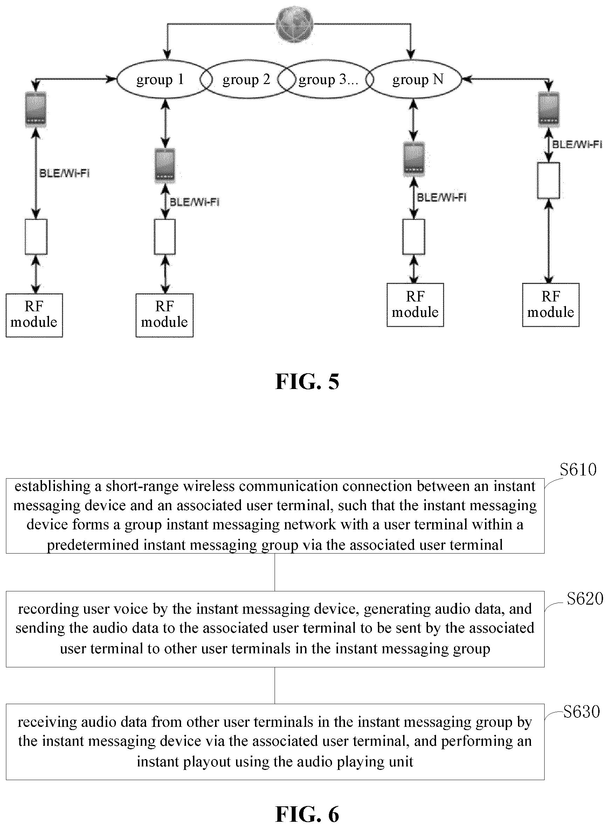

In the case where the instant messaging device is further provided with an RF module, as shown in FIG. 5, the RF module may be located inside the body of the instant messaging device, or may be located outside the body of the instant messaging device, and is connected with the body of the instant messaging device via a connection interface or wirelessly. In the region where the signal of the wireless communication network is poor or no signal is provided, the RF module may be used to transceive the audio data or other types of data between user terminals.

Based on the foregoing general description, the steps of the instant messaging method implemented by the instant messaging device will be briefly described below. As shown in FIG. 6, the method includes the following steps.

In step S610, a short-range wireless communication connection is established between the instant messaging device 20 and an associated user terminal 10, such that the instant messaging device forms a group instant messaging network with a user terminal within a predetermined instant messaging group via the associated user terminal.

The short-range wireless communication connection may include, for example, a low-power Bluetooth communication connection and/or a Wi-Fi communication connection.

In step S620, user voice is recorded by the instant messaging device, audio data is generated and sent to the associated user terminal, so as to be sent by the associated user terminal to other user terminals in the instant messaging group.

Specifically, the activation of the audio recording unit (such as a microphone) of the instant messaging device may be controlled by a control key or in other manners, thereby recording and sending audio by one touch. That is, audio is recorded when the key is pressed, and is sent when the key is released.

In step S630, audio data from other user terminals in the instant messaging group is received by the instant messaging device via the associated user terminal, and instant playout is performed using the audio playing unit.

Optionally, the method may also include (not shown):
indicating the state of the group instant messaging device using an information indicating circuit; and/or
when the wireless connection between the at least one user terminal and other user terminals in the instant messaging group is disconnected (for example, the network signal is poor or no network signal is provided), sending the audio data generated by the instant messaging device using the radio frequency module connected with the instant messaging device, and receiving the audio data sent by the corresponding radio frequency module associated with other user terminals in the instant messaging group and playing the audio data by the audio playing unit.

Optionally, the method may further include the following steps:
receiving, by the instant messaging device, position information using a GPS module, generating positioning data, converting the generated positioning data into audio data based on an output instruction, and outputting the audio data converted from the positioning data by the audio playing unit.

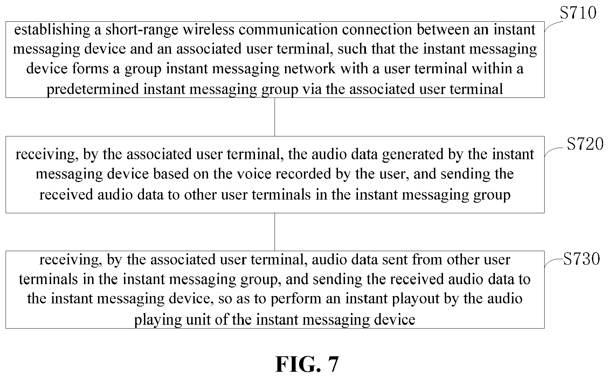

Correspondingly, the operation of instant messaging performed by the user terminal side is as shown in FIG. 7, including the following steps.

In step S710, a short-range wireless communication connection is established between the instant messaging device and an associated user terminal, such that the instant messaging device forms a group instant messaging network with a user terminal within a predetermined instant messaging group via the associated user terminal.

The predetermined instant messaging group may be a unique group pre-created in the instant messaging application of the user terminal, or one important group selected from a plurality of groups pre-created in the instant messaging application of the user terminal.

In step S720, the audio data generated by the instant messaging device based on the voice recorded by the user is received by the associated user terminal, and the received audio data is sent to other user terminals in the instant messaging group.

In step S730, audio data sent from other user terminals in the predetermined instant messaging group is received by the associated user terminal, and the received audio data is sent to the instant messaging device, so as to perform an instant playout by the audio playing unit of the instant messaging device.

In this step, when the associated user terminal receives audio or other data from other user terminals in the instant messaging group and there are multiple groups, it may be first determined whether the instant messaging group is the group which is preset to be assisted by the instant messaging device20 for instant messaging, and if so, the received data is sent to the instant messaging device directly, and is played out instantly by the instant messaging device.

Further, when the associated user terminal fails to send the audio data to at least one of other user terminals in the predetermined instant messaging group, indication information is sent to the instant messaging device to instruct the radio frequency module connected with the instant messaging device for sending the audio data, the audio data sent by other radio frequency modules with the same frequency is received, and the audio data is played by the audio playing unit.

The instant messaging device, and the instant messaging method and system according to the embodiments of the present disclosure simplify the group chat function, without the complicated APP operations (such as unlocking, starting an APP, looking for and selecting a group, or the like).

The present disclosure further relates to a storage medium on which computer program codes may be stored, and various embodiments of the method of the present disclosure may be implemented when the program codes are executed. The storage medium may be a tangible storage medium, such as an optical disk, a USB flash drive, a floppy disk, hard disk, etc.

Those skilled in the art should understand that the various exemplary components, systems, and methods described in connection with the embodiments disclosed herein may be implemented in hardware, software, or a combination of both. Whether it is implemented in hardware or software depends on the specific application and design constraints of the technical solution. A person skilled in the art can use different methods to implement the described functions for each particular application, but such implementations should be considered to fall within the scope of the present disclosure. When implemented in hardware, it may be, for example, an electronic circuit, an application specific integrated circuit (ASIC), an appropriate firmware, plug-in component, function card, etc. When implemented in software, the elements of the present disclosure are programs or code segments to perform the necessary tasks. The program or code segments may be stored in a computer readable medium or transmitted by a data signal carried in a carrier wave over a transmission medium or communication link. The "computer readable medium" may include any medium that may store or transmit information. Examples of the computer readable medium include an electronic circuit, a semiconductor memory device, a ROM, a flash memory, an erasable ROM (EROM), a floppy diskette, a compact disk CD-ROM, an optical disk, a hard disk, a fiber optic medium, a radio frequency (RF) link, etc. The code segments may be downloaded via computer networks such as the Internet, intranet, etc.

It should also be noted that the exemplary embodiments mentioned in the present disclosure describe some methods or systems based on a series of steps or devices. However, the present disclosure is not limited to the order of the above steps. That is, the steps may be performed in the order mentioned in the embodiment, or different from the order in the embodiment, or several steps may be performed simultaneously.

In the present disclosure, the features described and/or exemplified for one embodiment may be used in the same or similar manner in one or more other embodiments, and/or in combination with or in lieu of the features of other embodiments.

The above description is merely the preferred embodiment of the present disclosure, and is not intended to limit the present disclosure. For persons skilled in the art, various changes and modifications may be made to the embodiments of the present disclosure. Any modifications, equivalent substitutions, improvements, etc. made within the spirit and scope of the present disclosure shall fall within the scope of the present disclosure.

## Claims

1. A group instant messaging device, comprising:
a first wireless communication unit configured to perform short-range wireless communication with an associated user terminal, such that the group instant messaging device forms a group instant messaging network with a user terminal within a predetermined instant messaging group via the associated user terminal, the instant messaging group including: the associated user terminal and one or more additional user terminals wirelessly connected to the associated user terminal;
an audio recording unit configured to record user voices, generate audio data, and send the audio data to other user terminals in the instant messaging group by the associated user terminal via the group instant messaging network;
an audio playing unit configured to receive audio data from other user terminals in the instant messaging group by the associated user terminal via the group instant messaging network, and perform an instant playout; and
an input control unit configured to control the ON and OFF of the audio recording unit.

2. The group instant messaging device according to claim 1, further comprising: an information indicating circuit configured to indicate a state of the group instant messaging device.

3. The group instant messaging device according to claim 1, further comprising: a radio frequency module connected to the audio recording unit, the audio playing unit, and the input control unit to send and receive the audio data in the mode of radio frequency communication.

4. The group instant messaging device according to claim 3, wherein the radio frequency module is disposed in the body of the group instant messaging device, or
the radio frequency module is connected to a body of the group instant messaging device via a connection interface.

5. The group instant messaging device according to claim 2, wherein
the first wireless communication unit is a short-range wireless communication unit, and the short-range wireless communication unit includes a low-power Bluetooth module or a Wi-Fi communication module;
the input control unit is a control key, a touch screen, a gyroscope or an acceleration sensor located at on a front or side surface of the body of the group instant messaging device;
the audio recording unit is a microphone;
the audio playing unit is a speaker; and
the information indicating circuit includes at least one of an LCD display screen, an indicator circuit, or an audible indicating circuit.

6. The group instant messaging device according to claim 1, further comprising: a GPS positioning module configured to generate positioning data.

7. The group instant messaging device according to claim 6, further comprising:
a voice conversion module configured to convert the positioning data into audio data; and
an output control key configured to output the audio data converted from the positioning data by the voice conversion module to the audio playing unit.

8. The group instant messaging device according to claim 1, wherein
the group instant messaging device further includes a headphone jack; and/or
the group instant messaging device is a wearable device; and/or
the body of the group instant messaging device has thereon a data transmission interface;
the group instant messaging network further includes an additional instant messaging device associated with the additional terminal in the instant messaging group.

9. A group instant messaging system, comprising:
the group instant messaging device according to any one of claims 1-8; and
the associated user terminal including a remote wireless communication unit and a short-range wireless communication unit.

10. A group instant messaging method, comprising:
establishing a short-range wireless communication connection between a first portable terminal and an associated user terminal, such that the first portable terminal forms a group instant messaging network with a user terminal within a predetermined instant messaging group via the associated user terminal, wherein the instant messaging group includes: the associated user terminal and one or more additional user terminals wirelessly connected to the associated user terminal;
recording user voice by the first portable terminal, generating audio data, and sending the audio data to the associated user terminal to be sent by the associated user terminal to other user terminals in the instant messaging group;
receiving audio data from other user terminals in the instant messaging group by the first portable terminal via the associated user terminal, and performing an instant playout using an audio playing unit.

11. The method according to claim 10, wherein the short-range wireless communication connection comprises low-power Bluetooth communication connection and/or Wi-Fi communication connection, the method further comprising:
indicating a state of the group instant messaging device using an information indicating circuit; and/or
when the wireless connection between the at least one user terminal and other user terminals in the instant messaging group is disconnected, sending the audio data generated by the first portable terminal using an radio frequency module connected with the first portable terminal, and receiving audio data sent by a corresponding radio frequency module associated with other user terminals in the instant messaging group and playing the audio data by the audio playing unit.

12. The method according to claim 10, further comprising:
receiving, by the first portable terminal, position information using a GPS module, generating positioning data, converting the generated positioning data into audio data based on an output instruction, and outputting the converted audio data by the audio playing unit.

13. A group instant messaging method, comprising:
establishing a short-range wireless communication connection between a first portable terminal and an associated user terminal, such that the first portable terminal forms a group instant messaging network with a user terminal within a predetermined instant messaging group via the associated user terminal, wherein the instant messaging group includes: the associated user terminal and one or more additional user terminals wirelessly connected to the associated user terminal;
receiving, by the associated user terminal, audio data generated by the first portable terminal based on a voice recorded by the user, and sending the received audio data to other user terminals in the instant messaging group;
receiving, by the associated user terminal, audio data sent from other user terminals in the predetermined instant messaging group, and sending the received audio data to the first portable terminal, so as to perform an instant playout by the audio playing unit of the first portable terminal.

14. The method according to claim 13, wherein the short-range wireless communication connection comprises low-power Bluetooth communication connection and/or Wi-Fi communication connection; the method further comprising:
when the associated user terminal fails to send the audio data to at least one of other user terminals in the instant messaging group, sending indication information to the first portable terminal to instruct a radio frequency module connected to the first portable terminal to send the audio data; receiving audio data sent by other radio frequency modules with the same frequency, and playing the audio data by the audio playing unit.

15. The method according to claim 13, further comprising: setting one of a plurality of groups as the predetermined instant messaging group.
